# EUROPEAN PATENT SPECIFICATION

(11) **EP 0 673 570 B1**
(45) Date of publication and mention of the grant of the patent: **17.02.1999**
(21) Application number: 94901963.2
(22) Date of filing: 08.12.1993
(51) Int. Cl.: H04J 3/07

(54) **MULTIPLEXER AND DEMULTIPLEXER**
MULTIPLEXER UND DEMULTIPLEXER
MULTIPLEXEUR ET DEMULTIPLEXEUR

(30) Priority: 09.12.1992 FI 925598
(43) Date of publication of application: 27.09.1995
(73) Proprietor: NOKIA TELECOMMUNICATIONS OY, 02150 Espoo (FI)
(72) Inventor: KAASINEN, Matti, FIN-00520 Helsinki (FI); ALANKO, Ari, FIN-00300 Helsinki (FI); KATAINEN, Jouko, FIN-02340 Espoo (FI)
(74) Representative: Tomlinson, Kerry John
(86) International application number: FI9300527
(87) International publication number: WO9414254

(56) References cited:
- EP-A- 0 422 443
- EP-A- 0 500 243
- EP-A- 0 503 732
- US-A- 5 123 010

## Description

This invention relates to a multiplexer for combining a digital signal, a digital additional information and stuff bits into a time-division multiplex signal, a pulse frame of which is composed of successive n-bit bytes, at least one of these being a justification byte and at least the last bit of the justification byte being a fixed stuff bit and at least one bit before that or those being a justification opportunity bit, which is, depending on the justification needed, either a digital signal bit or a fixed stuff bit, while the rest of the justification byte consists of digital signal bits, which multiplexer comprises a flexible buffer, into which the digital signal is written and from which it is read to the pulse frame at a desired rate in such a manner that the digital signal bits, which will constitute the stuff bits of the justification byte, are repeated at the beginning of the following byte, and a multiplex circuit for composing the pulse frame of additional information and the digital signal fed from the buffer.

This invention relates also to a demultiplexer for separating a digital signal from a time-division multiplex signal consisting of the digital signal, a digital additional information and stuff bits, a pulse frame of which time-division multiplex signal is composed of successive n-bit bytes, at least one of these being a justification byte and at least the last bit of the justification byte being a fixed stuff bit and at least one bit before that or those being a justification opportunity bit, which is, depending on the justification needed, a digital signal bit or a fixed stuff bit, while the rest of the justification byte consists of digital signal bits, which demultiplexer comprises a demultiplex circuit for decomposing the pulse frame into additional information bytes not containing digital signal bits and to n-bit bytes containing the digital signal bits and the stuff bits, a flexible buffer, into which said n-bit bytes containing the digital signal bits and the stuff bits are written and from which the digital signal bits are read byte by byte.

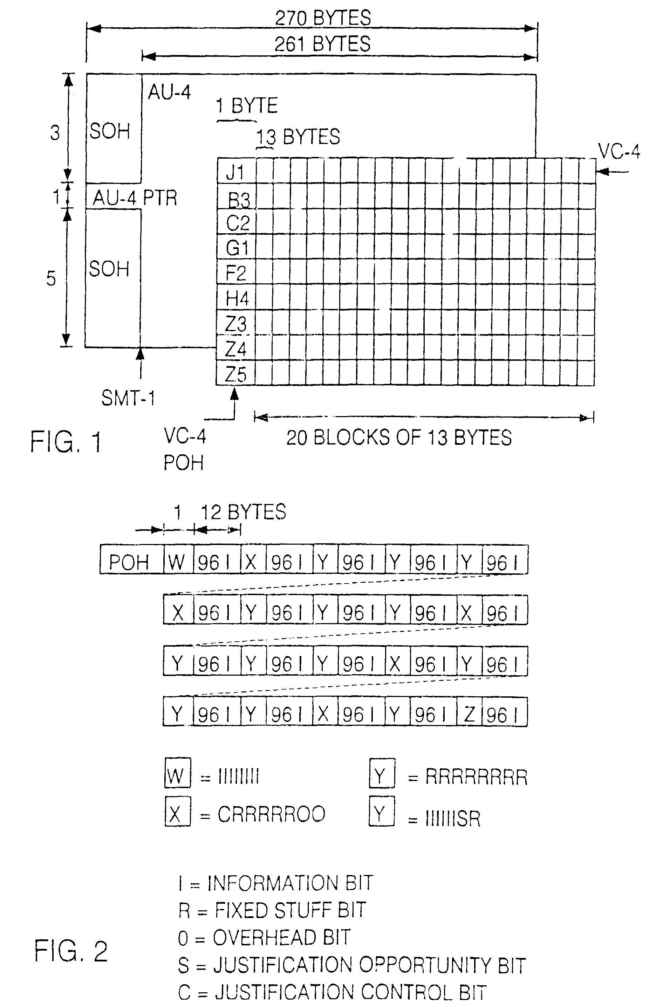

The object of the invention is to provide a multiplexer and a demultiplexer suitable for mapping and demapping of a 139.264 kbit/s signal by the CCITT recommendation G.709. According to this recommendation, a 139.264 kbit/s (140 M) signal is mapped into a Virtual Container VC-4 of a Synchronous Transport Module frame STM-1. Figure 1 of the attached drawing shows the structure of such an STM-1 frame together with overheads SOH and POH as well as the VC-4. Figure 2 of the drawing shows a mapping diagram of one row of the VC-4. From this mapping diagram is seen that each row has one justification byte Z, the two last bits of which are a justification opportunity bit S and a fixed stuff bit R. Depending on the justification needed, the justification opportunity bit S is either an information bit I or a fixed stuff bit R. An information of whether the justification opportunity bit S is an information bit I or a stuff bit R is included in justification control bits C, each row having five of these within X bytes. If the value of each C bit is zero, the justification opportunity bit S is an information bit, while the S is a stuff bit, if the values of the justification control bits C are 1. Majority vote is used for deciding on the basis of C bits, whether the justification opportunity bit S of the justification byte Z of each row is an information bit or a stuff bit.

EP Published Application 0 422 443 discloses a multiplexer and a demultiplexer for creating an STM-1 frame as described above when a 139.264 kbit/s signal is mapped into this frame. At the mapping according to this publication, the justification opportunity bit and the stuff bit of the justification bytes Z consist of bits of an actual information signal in such a way that the last bit or the two last bits of the justification byte are repeated at the beginning of the following byte, depending on the justification needed. For this purpose, the multiplexer and, respectively, the demultiplexer used for demapping comprise a flexible buffer, into which the information signal is written and from which it is read into the VC-4. A read address is generated for each bit separately and, when reading the justification bytes, this read address is changed by a multiplexer controller by 6 or 7 bits only, while the change in connection with a normal information byte is 8 bits. Accordingly, when reading the justification bytes, the last bit or the two last bits of these are repeated at the beginning of the following new byte. Such an addressing and such a reading from a flexible buffer bit by bit are difficult to implement in practice. Special components differing from the conventional ones have to be used and, additionally, the practical implementation of the circuit will be very complicated. Even if the multiplexer according to this publication tries to get rid of bitwise operation and to achieve a handling based on bytes, a processing of the justification byte on the basis of individual bit addresses of the buffer leads in practice to a very inconvenient device solution, as has been found out above.

The object of the present invention is to provide a novel multiplexer for mapping a 139.264 kbit/s signal into a VC-4 container of an STM-1 frame in such a way that there is no need to use an address formation based on bits and known from the above publication and to achieve a handling entirely based on bytes.

This is achieved by means of a multiplexer according to the invention, which is characterized in that the flexible buffer comprises a byte buffer and a bit buffer, into which byte buffer the digital signal is written continuously byte by byte at a speed depending on the clock frequency of the digital signal and from which byte buffer it is read byte by byte into the bit buffer at a speed depending on the frequency of the pulse frame, the reading being stopped for the time required by the additional information, and in which bit buffer the justification byte bits to be replaced by fixed stuff bits are offset to the beginning of the following byte.

The bit buffer preferably comprises a register, into which the n-1 least significant bits of each n-bit byte are written, and a window shifter, into which are written each byte entirely and also the n-1 bits delayed by one clock cycle from the register to form the most significant bits and from which are read n bits at a place indicated by an offset address, the bit pointed by the offset address being the least significant bit of the read byte, which offset address is increased at each justification byte by one, if the justification opportunity bit included therein is an information bit, and by two, if the justification opportunity bit is a stuff bit.

On the other hand, a demultiplexer according to the invention attending to demapping is characterized in that the flexible buffer comprises a bit buffer and a byte buffer, into which bit buffer said n-bit bytes are written at a speed depending on the frequency of the pulse frame and from which bit buffer the digital signal bits are written into the byte buffer at the same frequency but stopping the writing for the time of the additional information bytes and from which byte buffer the digital signal is read continuously byte by byte at a speed depending on the clock frequency of the digital signal.

The bit buffer preferably comprises a rotator, into which the n-bit bytes coming from a demultiplex circuit are written and in which they are rotated according to a rotation offset x in such a way that the x most significant bits of each byte are offset to form the least significant bits of this byte, a register, into which the bytes obtained from the rotator are written, and a by pass selector, into which are written the rotated bytes obtained directly from the rotator as well as the rotated bytes delayed by one clock cycle and obtained from the register and from which are read the x least significant bits of the byte obtained from the rotator to form the x least significant bits of an output byte and the n-x most significant bits of the byte obtained from the register to form the n-x most significant bits of the output byte, which rotation offset x is increased by one at each justification byte, if the justification opportunity bit included therein is an information bit, and by two, if the justification opportunity bit is a stuff bit.

In the following, the multiplexer and the demultiplexer according to the invention are described in more detail referring to an attached drawing, in which
Figure 1 shows a structure of an STM-1 frame,
Figure 2 shows a mapping diagram of one row of a VC-4 included in the frame structure according to Figure 1,
Figure 3 shows a block diagram of a multiplexer structure according to the invention,
Figure 4 shows a more detailed structure of a bit buffer included in the multiplexer of Figure 3,
Figure 5 illustrates the operation of the circuit according to Figure 4,
Figure 6 shows a block diagram of a demultiplexer structure according to the invention,
Figure 7 shows a more detailed structure of a bit buffer included in the demultiplexer of Figure 6, and
Figure 8 illustrates the operation of the circuit according to Figure 7.

Figure 1 and 2 show a mapping diagram by the CCITT recommendation G.709 for mapping of a 139.264 kbit/s signal into a container VC-4 of an STM-1 frame. As mentioned above, the implementation of this mapping diagram causes problems especially for the justification byte Z shown in more detail in Figure 2, because this byte Z includes information bits I as well as a justification opportunity bit S and a fixed stuff bit R.

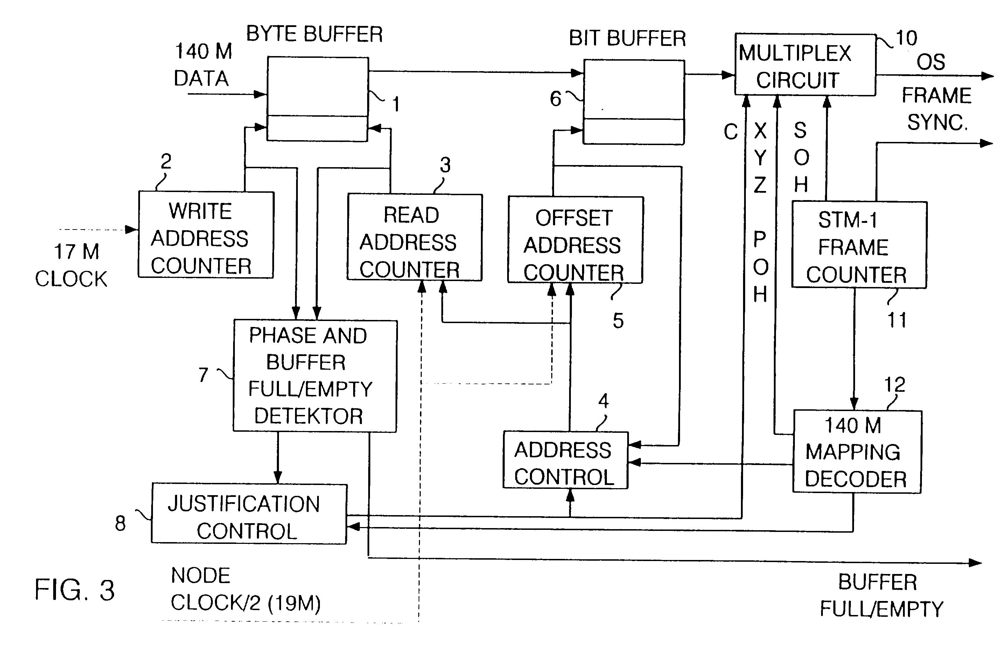

Figure 3 shows a block diagram of a multiplexer according to the invention, by means of which multiplexer a digital signal may be mapped into a frame similar to that shown in the Figures 1 and 2. The 140 M input data of the block diagram of Figure 3 is CMI-decoded and in a 8-bit parallel mode. These 8-bit bytes are then written into a byte buffer 1. The byte buffer 1 is a 16-byte register, into which the 140 M data is written as 8-bit bytes, the writing being controlled by a write address counter 2, the clock frequency of which is 140 MHz/8, i.e. about 17 MHz. A reading of data from the byte buffer 1 is controlled by a read address counter 3, the clock frequency of which is 155.52 MHz/8, i.e. about 19 MHz. The reading is stopped during overheads SOH and POH appearing from the Figures 1 and 2, the SOH being a section overhead and the POH being a line overhead, and during Y and X bytes as well as during an extra byte gap caused by the justification bit S and the stuff bit R in the justification byte Z. The formation of this extra byte gap will be explained later.

As said above, the write address counter is clocked at the frequency of 17 MHz. The write address is increased by one each time a byte is written. The writing is never stopped, i.e. it is continuous. On the other hand, the read address counter 3 is clocked at the frequency of 19 MHz. The read address is also increased by one each time a byte is read. The reading is stopped, however, during an insertion of the SOH and POH as well as the Y and X bytes into the frame and also during the extra byte gap caused by the justification bits S and the stuff bits R in the bytes Z. An interruption of reading is controlled by an address control block 4. In addition to the fact that the address control block 4 controls the read address counter 3, it also controls an offset address counter 5. The operation of this offset address counter 5 will appear in more detail in connection with the description of a bit buffer 6. The readings of the write address counter 2 and the read address counter 3 are received, besides by the byte buffer 1, also by a phase and buffer full/empty detector 7, which calculates the difference between the read and write addresses of the byte buffer. Because the write and read clocks are not synchronized with each other, the addresses may change at the same time. The calculation is performed in such a way that a concurrence of this kind does not cause errors in the difference calculated. The detector 7 informs the processor of the byte buffer 1 being full/empty. Moreover, a phase detector controls a justification control block 8. This justification control block detects the difference between the read and write addresses. It makes a decision on whether a justification is necessary.

In a multiplex circuit 10, the SOH, a test byte, the POH, the Y byte, the Z byte together with its justification opportunity and stuff bits S, R and the X byte with its justification control bits C are written into an output signal OS of the multiplexer. This formation of the output signal OS is controlled in the multiplex circuit 10 by an STM-1 frame counter 11 and a 140 M mapping decoder 12. The actual digital signal will be obtained from the bit buffer 6, this digital signal containing even the justification bytes Z having full 8 bits, from which the 6 or 7 most significant ones remain as information bits in the output signal OS. Accordingly, the Z bytes obtained from the 140 M mapping decoder include only one or two stuff bits to be written on the last bit or the two last bits of the Z byte coming from the bit buffer 6.

The STM-1 frame counter 11 creates the actual frame structure and controls the writing into an SOH block address (test byte and pointer value). The pointer value is fixed to 522 so that the very VC-4 starts at the left upper corner of an AU-4 immediately after the SOH bytes according to Figure 1. On the other hand, the 140 M mapping decoder 12 controls the writing of the 140 Mbit/s data and the X, Y and Z bytes. It also controls buffer address counters, i.e. the address control block 4, which again controls the write address counter 3 and the offset address counter 5. This 140 M mapping decoder 12 gives information of when reading from the byte buffer 1 shall be stopped.

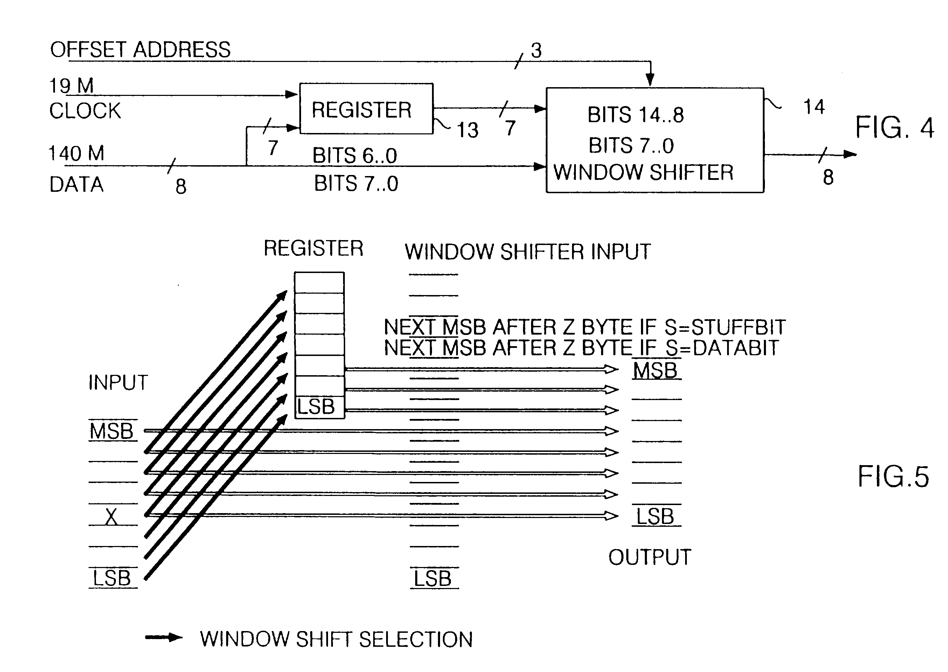

The most substantial part of the multiplexer according to the invention is the bit buffer 6, which receives the digital signal bits from the byte buffer 1 and from which they are read by the multiplex circuit 10. Figure 4 shows the structure of the bit buffer in greater detail. The bit buffer comprises a 7-bit register 13, into which the 7 least significant bits of a 8-bit byte received from the byte buffer 1 of Figure 1 are written with a 19 MHz clock, and a window shifter 14 having a 15-bit input and a 8-bit output. The output of the 7-bit register 13 is used as the 7 most significant bits of the window shifter input. Reading from the bit buffer is controlled by the offset address counter 5. The offset address is normally kept constant, but in case of justification, it is increased by two at the justification byte Z, the justification opportunity bit S being a stuff bit, or by one, if no justification is performed, the justification opportunity bit being an information bit.

Figure 5 shows the operating principle of the bit buffer according to Figure 4. From this Figure 5 appears how the window shifter 14 selects bits to its output by means of a given offset address. In Figure 5, the offset address is selected to be 3. It can be seen that the window shifter 14 selects the bit pointed by the offset address as the least significant bit of the bit buffer output, which is the place where the stuff bit R is located in the Z byte. This bit is also written into a bit register location that is next more significant than the location of the register bit selected as the most significant bit of the bit buffer. The offset address is increased, when the stuff bit R covers the bit selected as the least significant bit of the bit buffer in case of Z byte, and this covered bit is seen on next clock cycle through the register as the most significant bit of the bit buffer. This location is kept constant during one STM-1 row. Reading from the bit buffer is stopped at regular intervals during the SOH, POH, Y and X bytes. After the offset address has been increased to 7, all bits shall be fed from the register 13, which creates an extra byte gap. This happens also when the offset address is 6 and the justification opportunity bit S of the Z byte is a justification bit, i.e. a stuff bit in practice. Consequently, the operation of the byte buffer 6 creates according to the above a situation in which the stuff bits (the number of which may naturally be higher than 2 as per standard) to be located at the end of the Z byte are made possible by a change in the offset address, whereby the bits to be covered by the stuff bits are repeated at the beginning of the following byte. At the maximum rotation of the offset address (the range is 0 to 7), a situation arises when the whole output of the bit buffer is read from the register 13, and thus, no new byte may be received from the byte buffer 1. For this reason expressly, reading from the byte buffer is stopped also during these extra byte gaps. The practical result is a situation in which it is not necessary to handle an incoming digital signal on bit basis at all and no bit-based addresses need to be used in the buffer storages. It is thus relatively easy to provide the bit buffer 6 according to the invention with standard components.

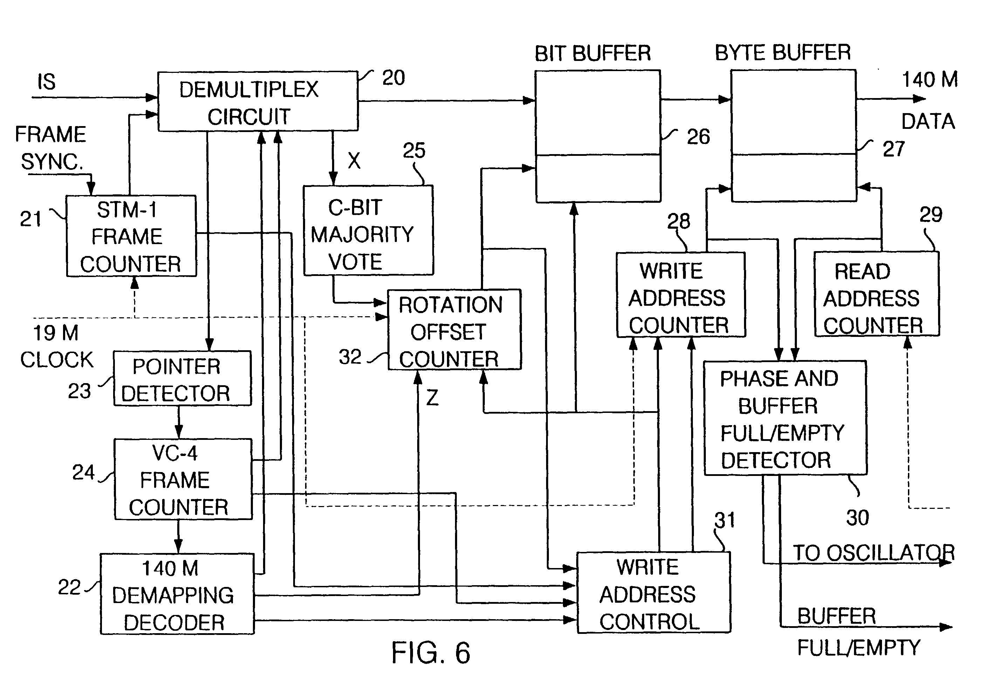

Figures 6 to 8 show and illustrate a demultiplexer for separating a digital signal from a time-division multiplex signal consisting of the digital signal, a digital additional information and stuff bits, which time-division multiplex signal corresponds to the time-division multiplex signal generated by the multiplexer according to Figure 3. A pulse frame of such a time-division multiplex signal is thus composed of successive n-bit bytes, at least one of these being a justification byte Z, at least the last bit of the justification byte being a fixed stuff bit and at least one bit before that or those being a justification opportunity bit, which is, depending on the justification needed, either a digital signal bit or a fixed stuff bit, while the rest of the justification byte consists of digital signal bits.

Figure 6 shows a block diagram of a demultiplexer, which receives an Input Signal IS corresponding to a signal mapped into an STM-1 frame according to the CCITT recommendation G.709. This signal IS is received by a demultiplex circuit 20, in which a test byte and pointer value bytes are read controlled by an STM-1 frame counter 21. A pointer detecting block 23, which is also connected to the demultiplex circuit 20, synchronizes a VC-4 frame counter 24. In connection with positive pointer justification, the writing into a byte buffer 27 is stopped during three synchronization bytes. In case of negative pointer justification, the writing is started three bytes earlier than normally (after the pointer value bytes).

The bit justification is controlled by the C bits in the X bytes. The justification control bits C in the X bytes are read controlled by a 140 M demapping decoder 22. Each row of the VC-4 contains five X bytes including one C bit each. CCCCC = 00000 indicates that the justification opportunity bit S of the justification byte Z is an information bit, while CCCCC = 11111 indicates that the S bit is a justification bit. Majority vote is used to make the justification decision in a majority vote block 25 of the C bit to prevent single or double errors from influencing the interpretation of the C bit values.

The STM-1 frame counter 21 controls the reading of the test byte and the pointer value from the SOH. It also controls buffer address counters and stops them during the SOH bytes. The VC-4 frame counter 24 controls the 140 M demapping decoder 22. It also controls a write address counter 28 of the byte buffer and stops it during the POH bytes. The 140 M demapping decoder 22 controls the reading of the X byte. It also controls the buffer write address counter, stops it during the X and Y bytes and points the place of the Z byte.

The digital signal is fed to a bit buffer 26 from the demultiplex circuit 20, from the input signal of which the additional information, except for the justification and stuff bits, have been eliminated. By means of this bit buffer 26, the justification and stuff bits are removed from the digital signal and the bit content and order of this digital signal, but not yet the frequency, are reset to correspond to the signal which was fed to the multiplexer of Figure 3. The operation of the bit buffer 26 will be explained in more detail later on.

From the bit buffer 26 the digital signal is fed to a byte buffer 27. This byte buffer is a 64-byte register, into which the digital signal from the bit buffer 26 is written as 8-bit bytes controlled by a write address counter 28. The reading of the data signal is controlled by a read address counter 29. The write address counter is clocked with a 19 MHz clock. The write address is increased always by one. The writing is stopped during the SOH, POH, Y and X bytes and also during an extra gap, which will be explained below. The read address counter is clocked at a frequency which is 140 MHz divided by eight (about 17 MHz). The reading is never stopped. A phase and buffer full/empty detector 30 is in connection with the write address counter 28 as well as with the read address counter 29. Phase comparison is obtained from the most significant bits of both the write and the read address. The frequency obtained from the most significant bits is divided by two and fed to a phase detector. The output of the phase detector controls a voltage-controlled oscillator, which generates a 17 MHz clock for the demultiplexer.

A write address control circuit 31 receives an information of an occurrence of the SOH, POH, X and Y bytes and stops the write address counter during these bytes. It also receives an information of an occurrence of an extra time gap from a rotation offset counter 32 and stops the write address counter even then. In the following, the bit buffer 26 and the above extra time gap caused by the operation of the bit buffer will be explained in more detail.

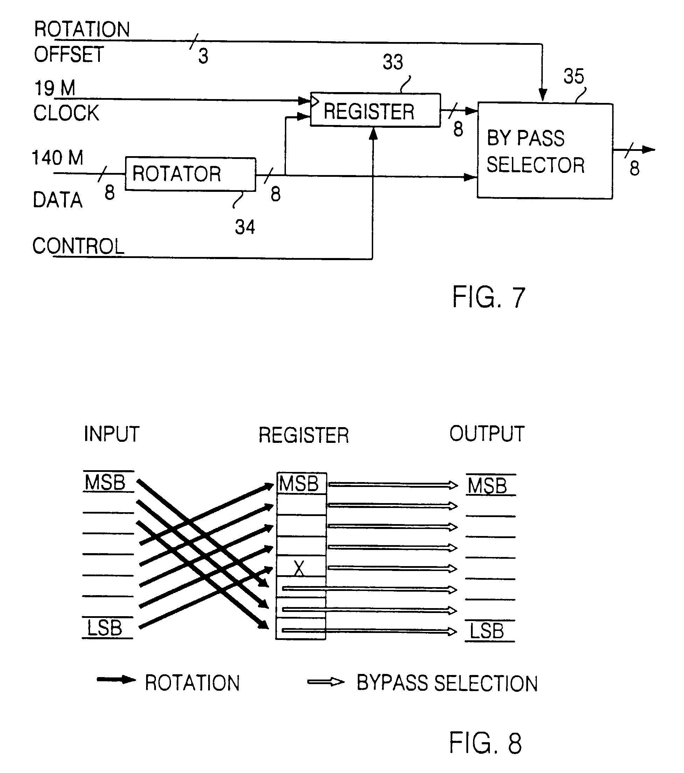

Figure 7 shows the structure of the bit buffer 26 in greater detail. The bit buffer comprises a 8-bit register 33, a rotator 34 and a by pass selector 35. The 140 M data extracted from the STM-1 frame is fed through the rotator 34. The bytes rotated in the rotator are written with a 19 MHz clock into the register 33. The by pass selector 35 selects to its output a 8-bit byte from the bits obtained directly from the output of the rotator 34 and delayed by one clock cycle from the register 33. The rotator 34 rotates the bytes of an incoming data signal according to a rotation offset in such a way that a number of the most significant bits of the byte, in conformity with the rotation offset value of each byte, are offset to form the least significant bits of this byte. This rotation is illustrated in Figure 8, in which the value of the rotation offset x is set to 3. In the rotator 34, the three most significant bits are thus rotated to form the least significant bits of the byte, through which the byte to be fed to the register 33 is achieved in Figure 8. This same byte goes directly also to the by pass selector 35. Accordingly, both the rotated bytes obtained directly from the rotator 34 and the rotated bytes delayed by one clock cycle and obtained from the register 33 are written into the by pass selector 35. As the least significant bits of the output of the by pass selector 35 are selected a number of bits pointed by the rotation offset value from the byte obtained from the rotator 34. This appears from Figure 8 in such a way that the three least significant bits of the output are the same ones which were the three most significant bits of the byte in the signal coming to the rotator 34. The other output bits, i.e. the 5 most significant bits of the output byte in the case of Figure 8, consist of the five most significant bits of the byte coming from the register 33. This situation is valid also when the rotation offset value is 3. If the rotation offset value is 0, the content of the register 33 is seen directly from the output of the by pass selector 35. Consequently, all bits of the output are then bits obtained from the register 33.

As appears from the above and can be seen from the rotation offset counter block 32 of the diagram in Figure 6, the writing to and reading from the bit buffer 26 are controlled by the rotation offset counter block 32. The rotation offset is normally kept constant, but is increased by two at the Z bytes, if a justification occurs (if the S bit is a stuff bit), or by one, if no justification occurs (the S bit is an information bit).

An extra time gap occurs at the Z byte, when the rotation offset is 7 (range of variation of the rotation offset is 0 to 7). An extra time gap also occurs when the rotation offset is 6 and the justification opportunity bit S is a stuff bit. At these points, the writing into the register 33 from the most significant bit to the bit pointed by the rotation offset value is inhibited, which means that the stuff bits are prevented from being written on the information bits. Also the byte seen from the by pass selector is prevented from being offset to the byte buffer.

Above the multiplexer and the demultiplexer according to the invention have been described by means of one structure solution only. It is, however, understandable that especially the operations illustrated in the Figures 4, 5, 7 and 8 could be provided by means of equipment solutions other than described in the Figures 3 and 6. Further, the description above concerns only a case in which the byte length is 8 bits. It is, however, to be understood that these procedures could be applied as such and the described structure solutions could be modified directly as per byte length, if it were other than 8 bits, i.e. 16 bits, for instance.

## Claims

1. A multiplexer for combining a digital signal, a digital additional information and stuff bits into a time-division multiplex signal, a pulse frame of which is composed of successive n-bit bytes, at least one of these being a justification byte (Z) and at least the last bit of the justification byte being a fixed stuff bit (R) and at least one bit before that or those being a justification opportunity bit (S), which is, depending on the justification needed, either a digital signal bit (I) or a fixed stuff bit (R), while the rest of the justification byte (Z) consists of digital signal bits (I), which multiplexer comprises
a flexible buffer (1, 6), into which the digital signal is written and from which it is read into the pulse frame at a desired rate in such a manner that the digital signal bits (I) which will constitute the stuff bits (R) of the justification byte (Z) are repeated at the beginning of the following byte, and
a multiplex circuit (10) for composing the pulse frame of the additional information and the digital signal fed from the buffer storage (1, 6),
**characterized** in that the flexible buffer comprises
a byte buffer (1) and a bit buffer (6), into which byte buffer (1) the digital signal is written continuously byte by byte at a speed depending on the clock frequency of the digital signal and from which byte buffer it is read byte by byte into the bit buffer (6) at a speed depending on the frequency of the pulse frame, the reading being stopped for the time required by the additional information, and in which bit buffer (6) the justification byte (Z) bits to be replaced by fixed stuff bits (R) are offset to the beginning of the following byte.

2. A multiplexer according to claim 1,
**characterized** in that the bit buffer (6) comprises
a register (13), into which the n-1 least significant bits of each n-bit byte are written, and
a window shifter (14), into which are written each byte entirely and also the n-1 bits delayed by one clock cycle from the register (13) to form the most significant bits and from which are read n bits at a place indicated by an offset address, the bit pointed by the offset address being the least significant bit of the read byte, which offset address is increased at each justification byte (Z) by one, if the justification opportunity bit (S) included therein is an information bit (I), and by two, if the justification opportunity bit is a stuff bit (R).

3. A demultiplexer for separating a digital signal from a time-division multiplex signal consisting of the digital signal, a digital additional information and stuff bits, a pulse frame of which time-division multiplex signal is composed of successive n-bit bytes, at least one of these being a justification byte (Z) and at least the last bit of the justification byte being a fixed stuff bit (R) and at least one bit before that or those being a justification opportunity bit (S), which is, depending on the justification needed, a digital signal bit (I) or a fixed stuff bit (R), while the rest of the justification byte (Z) consists of digital signal bits (I), which demultiplexer comprises
a demultiplex circuit (20) for decomposing the pulse frame into additional information bytes not containing digital signal bits (I) and to n-bit bytes containing the digital signal bits (I) and the stuff bits (R),
a flexible buffer (26, 27), into which said n-bit bytes containing the digital signal bits and the stuff bits are written and from which the digital signal bits (I) are read byte by byte,
**characterized** in that the flexible buffer comprises a bit buffer (26) and a byte buffer (27), into which bit buffer (26) said n-bit bytes are written at a speed depending on the frequency of the pulse frame and from which bit buffer the digital signal bits (I) are written into the byte buffer (27) at the same frequency but stopping the writing for the time of the additional information bytes and from which byte buffer the digital signal is read continuously byte by byte at a speed depending on the clock frequency of the digital signal.

4. A demultiplexer according to claim 3,
**characterized** in that the bit buffer (26) comprises
a rotator (34), into which the n-bit bytes coming from a demultiplex circuit (20) are written and in which they are rotated according to a rotation offset x in such a way the x most significant bits of each byte are offset to form the least significant bits of this byte,
a register (33), into which the bytes obtained from the rotator (34) are written, and
a by pass selector (35), into which are written the rotated bytes obtained directly from the rotator (34) as well as the rotated bytes delayed by one clock cycle and obtained from the register (33) and from which are read the x least significant bits of the byte obtained from the rotator to form the x least significant bits of an output byte and the n-x most significant bits of the byte obtained from the register to form the n-x most significant bits of the output byte, which rotation offset x is increased by one at each justification byte (Z), if the justification opportunity bit (S) included therein is an information bit (I), and by two, if the justification opportunity bit is a stuff bit (R).

## Patentansprüche

1. Multiplexer zum Zusammenfügen eines digitalen Signals, einer digitalen Zusatzinformation und Stopfbits zu einem Zeitmultiplexsignal, wobei ein Impulsrahmen des Signals aus aufeinanderfolgenden n-Bit Bytes besteht, wovon zumindest eines ein Anpassungsbyte (Z) ist, wobei zumindest das letzte Bit des Anpassungsbytes ein festgelegtes Stopfbit (R) ist und zumindest ein Bit vor diesem oder vor diesen ein Anpassungsmöglichkeitsbit (S) ist, bei dem es sich in Abhängigkeit von der benötigten Anpassung entweder um ein digitales Signalbit (I) oder ein festgelegtes Stopfbit (R)handelt, während der Rest des Anpassungsbytes (Z) aus digitalen Signalbits (I) besteht, wobei der Multiplexer
einen flexiblen Zwischenspeicher (1, 6) aufweist, in den das digitale Signal geschrieben und aus dem es in den Impulsrahmen mit einer gewünschten Rate gelesen wird, wobei dies derart erfolgt, daß die die Stopfbits (R) des Anpassungsbytes (Z) bildenden digitalen Signalbits (I) am Anfang des folgenden Bytes wiederholt werden, und
eine Multiplexschaltung (10) zur Bildung des Impulsrahmens aus den Zusatz informationen und dem vom Zwischenspeicher (1, 6) zugeführten Signal aufweist,
**dadurch gekennzeichnet, daß**
der flexible Zwischenspeicher
einen Byte-Zwischenspeicher (1) und einen Bit-Zwischenspeicher (6) umfaßt, wobei das digitale Signal (1) fortlaufend byteweise mit einer von der Taktfrequenz des digitalen Signals abhängigen Geschwindigkeit in den Byte-Zwischenspeicher geschrieben wird und es aus diesem Byte-Zwischenspeicher byteweise mit einer von der Frequenz des Impulsrahmens abhängigen Geschwindigkeit in den Bit-Zwischenspeicher (6) gelesen wird, wobei das Lesen für die Zeit gestoppt wird, die eine Zusatz information benötigt, und wobei in den Bit-Zwischenspeicher die durch festgelegte Stopfbits (R) zu ersetzenden Bits des Anpassungsbytes (Z) zum Anfang des folgenden Bytes versetzt werden.

2. Multiplexer nach Anspruch 1,
**dadurch gekennzeichnet, daß**
der Bit-Zwischenspeicher (6)
ein Register (13), in das die n-1 niedrigstwertigen Bits eines jeden n-Bit Bytes geschrieben werden, und
eine Datenfenster-Verschiebe-Einrichtung (14) umfaßt, in die jedes Byte vollständig und auch die um einen Taktzyklus verzögerten n-1 Bits aus dem Register (13) zu Bildung der höchstwertigen Bits geschrieben werden und aus dem n Bits von einer durch eine Versetzungsadresse gekennzeichnete Stelle gelesen werden, wobei das mit der Versetzungsadresse bezeichnete Bit das niedrigstwertige Bit des gelesenen Bytes ist, und wobei die Versetzungsadresse bei jedem Anpassungsbyte (Z) um eins erhöht wird, wenn es sich bei dem darin enthaltenen Anpassungsmöglichkeitsbit (S) um ein Informationsbit (I) handelt, und um zwei erhöht wird, wenn es sich bei dem Anpassungsmöglichkeitsbit um ein Stopfbit (R) handelt.

3. Demultiplexer zur Trennung eines digitalen Signals von einem Zeitmultiplexsignal, das aus dem digitalen Signal, einer digitalen Zusatzinformation und Stopfbits besteht, wobei ein Impulsrahmen dieses Zeitmultiplexsignals aus aufeinanderfolgenden n-Bit Bytes besteht, wovon zumindest eines ein Anpassungsbyte (Z) ist, wobei zumindest das letzte Bit des Anpassungsbytes ein festgelegtes Stopfbit (R) ist und zumindest ein Bit vor diesem oder vor diesen ein Anpassungsmöglichkeitsbit (S) ist, bei dem es sich in Abhängigkeit von der benötigten Anpassung um ein digitales Signalbit (I) oder ein festgelegtes Stopfbit (R) handelt, während der Rest des Anpassungsbytes (Z) aus digitalen Signalbits (I) besteht, wobei der Demultiplexer
eine Demultiplexschaltung (20) zur Zerlegung des Impulsrahmens in zusätzliche Informationsbytes, die keine digitalen Signalbits (I) enthalten, und in n-Bit Bytes, die die digitalen Signalbits (I) und die Stopfbits (R) enthalten,
einen flexiblen Zwischenspeicher (26, 27), in den die n-Bit Bytes, die die digitalen Signalbits und die Stopfbits enthalten, byteweise geschrieben werden und aus dem die digitalen Signalbits (I) byteweise gelesen werden,
**dadurch gekennzeichnet, daß**
der flexible Zwischenspeicher einen Bit-Zwischenspeicher (26) und einen Byte-Zwischenspeicher (27) umfaßt, wobei die n-Bit Bytes mit einer von der Frequenz des Impulsrahmens abhängigen Geschwindigkeit in den Bit-Zwischenspeicher (26) geschrieben werden und die digitalen Signalbits (I) aus dem Bit-Zwischenspeicher (26) in den Byte-Zwischenspeicher (27) mit der gleichen Frequenz geschrieben werden, wobei jedoch das Schreiben für die Zeit der Zusatzinformationsbytes gestoppt ist, und wobei das digitale Signal aus diesem Byte-Zwischenspeicher fortlaufend byteweise mit einer von der Taktfrequenz des digitalen Signals abhängigen Geschwindigkeit gelesen wird.

4. Demultiplexer nach Anspruch 3,
**dadurch gekennzeichnet, daß**
der Bit-Zwischenspeicher (26)
eine Rotationseinrichtung (34), in die die von einer Demultiplexschaltung (20) stammenden n-Bit Bytes geschrieben werden und in der sie entsprechend einer Rotationsversetzung x derart rotiert werden, daß die x höchstwertigen Bits eines jeden Bytes zur Bildung der niedrigstwertigen Bits dieses Bytes versetzt werden,
ein Register (33), in das die von der Rotationseinrichtung (34) erhaltenen Bytes geschrieben werden, und
eine Einrichtung (35) zur Datenumleitung und -auswahl umfaßt, in die die direkt von der Rotationseinrichtung (34) erhaltenen rotierten Bytes sowie die um einen Taktzyklus verzögerten und vom Register (33) erhaltenen rotierten Bytes geschrieben werden und aus dem die x niedrigstwertigen Bits des von der Rotationseinrichtung erhaltenen Bytes gelesen werden, damit die x niedrigstwertigen Bits eines Ausgangsbytes gebildet werden, und die n-x höchstwertigen Bits des vom Register erhaltenen Bytes gelesen werden, damit die n-x höchstwertigen Bits des Ausgangsbytes gebildet werden, deren Rotationsversetzung x bei jedem Anpassungsbyte (Z) um eins erhöht wird, wenn es sich bei dem darin enthaltenen Anpassungsmöglichkeitsbit (S) um ein Informationsbit (I) handelt, und um zwei erhöht wird, wenn es sich bei dem Anpassungsmöglichkeitsbit um ein Stopfbit (R) handelt.

## Revendications

1. Multiplexeur pour combiner un signal numérique, des informations numériques supplémentaires et des bits de bourrage en un signal de multiplexage par répartition dans le temps, dont une trame d'impulsions est constituée de multiplets à n bits successifs, dont au moins l'un d'entre eux est un multiplet de justification (Z), au moins le dernier bit du multiplet de justification étant un bit de bourrage fixe (R) et au moins un bit avant celui-ci ou ceux-ci étant un bit d'opportunité de justification (S), qui est, en fonction de la justification souhaitée, un bit de signal numérique (I) ou bien un bit de bourrage fixe (R), tandis que le reste du multiplet de justification (Z) est constitué de bits de signal numérique (I), lequel multiplexeur comprend
une mémoire tampon flexible (1, 6) dans laquelle le signal numérique est écrit et à partir de laquelle il est lu en la trame d'impulsions, à une vitesse souhaitée, de telle sorte que les bits de signal numérique (I) qui vont constituer les bits de bourrage (R) du multiplet de justification (Z) soient répétés au début du multiplet suivant, et
un circuit de multiplexage (10) pour composer la trame d'impulsions des informations supplémentaires et du signal numérique provenant de la mémoire tampon (1, 6),
caractérisé en ce que la mémoire tampon flexible comprend
une mémoire tampon de multiplets (1) et une mémoire tampon de bits (6), mémoire tampon de multiplets (1) dans laquelle le signal numérique est écrit en continu, multiplet par multiplet, à une vitesse qui dépend de la fréquence d'horloge du signal numérique, la mémoire tampon de multiplets étant lue, multiplet par multiplet, qui sont transférés dans la mémoire tampon de bits (6), à une vitesse qui dépend de la fréquence de la trame d'impulsions, la lecture étant arrêtée pour la durée requise par les informations supplémentaires, et les bits du multiplet de justification (Z) dans la mémoire tampon de bit (6) qui doivent être remplacés par des bits de bourrage fixe (R) étant décalés au début du multiplet suivant.

2. Multiplexeur selon la revendication 1,
caractérisé en ce que la mémoire tampon de bits (6) comprend
un registre (13) dans lequel sont écrits les n-1 bits les moins significatifs de chaque multiplet à n bits, et
un décaleur à fenêtre (14) dans lequel sont écrits chaque multiplets, entièrement, ainsi que les n-1 bits, retardés d'un cycle d'horloge, qui proviennent du registre (13), pour former les bits les plus significatifs, et à partir duquel sont lus les n bits, en un endroit indiqué par une adresse de décalage, le bit pointé par l'adresse de décalage étant le bit le moins significatif du multiplet lu, l'adresse de décalage étant incrémentée de un à chaque multiplet de justification (Z), si le bit d'opportunité de justification (S) qui y est contenu est un bit d'information (I), et de deux, si le bit d'opportunité de justification est un bit de bourrage (R).

3. Démultiplexeur pour séparer un signal numérique provenant d'un signal de multiplexage par répartition dans le temps, constitué du signal numérique, d'informations numériques supplémentaires et de bits de bourrage, formant une trame d'impulsions constituée de multiplets à n bits successifs, dont au moins l'un d'entre eux est un multiplet de justification (Z), au moins le dernier bit du multiplet de justification étant un bit de bourrage fixe (R) et au moins un bit avant celui-ci ou ceux-ci étant un bit d'opportunité de justification (S), qui est, en fonction de la justification souhaitée, un bit de signal numérique (I) ou bien un bit de bourrage fixe (R), tandis que le reste du multiplet de justification (Z) est constitué de bits du signal numérique (I), lequel démultiplexeur comprend
un circuit de démultiplexage (20) pour décomposer la trame d'impulsions en multiplets d'informations supplémentaires ne contenant pas de bits du signal numérique (I) et en multiplets à n bits contenant les bits du signal numérique (I) et les bits de bourrage (R),
une mémoire tampon flexible (26, 27) dans lequel sont écrits lesdits multiplets à n bits contenant les bits du signal numérique et les bits de bourrage, et à partir duquel les bits du signal numérique (I) sont lus, multiplet par multiplet,
caractérisé en ce que la mémoire tampon flexible comprend une mémoire tampon de bits (26) et une mémoire tampon de multiplets (27), lesdits multiplets à n bits étant écrits dans la mémoire tampon de bits (26), à une vitesse qui dépend de la fréquence de la trame d'impulsions, les bits du signal numérique (I) étant écrits à partir de la mémoire tampon de bit dans la mémoire tampon de multiplets (27), à la même fréquence mais avec arrêt de l'écriture pendant la durée des multiplets d'informations supplémentaires, le signal numérique dans la mémoire tampon de multiplets, étant lu en continu, multiplet par multiplet, à une vitesse qui dépend de la fréquence d'horloge du signal numérique.

4. Démultiplexeur selon la revendication 3,
caractérisé en ce que la mémoire tampon de bits (26) comprend
un permutateur circulaire (34) dans lequel sont écrits les multiplets à n bits provenant d'un circuit de demultiplexage (20), et dans lequel ils sont permutés selon un décalage circulaire x, de telle sorte que les x bits les plus significatifs de chaque multiplet soient décalés pour former les bits les moins significatifs de ce multiplet,
un registre (33) dans lequel sont écrits les multiplets obtenus du permutateur circulaire (34), et
un sélecteur de dérivation (35) dans lequel sont écrits les multiplets permutés, obtenus directement du permutateur circulaire (34), ainsi que les multiplets permutés retardés d'un cycle d'horloge et obtenus du registre (33), et à partir duquel sont lus les x bits les moins significatifs du multiplet obtenu du permutateur circulaire, pour former les x bits les moins significatifs d'un multiplet de sortie, et les n-x bits les plus significatifs du multiplet obtenu du registre, pour former les n-x bits les plus significatifs du multiplet de sortie, le décalage circulaire x étant incrémenté de un à chaque multiplet de justification (Z), si le bit d'opportunité de justification (S) qui y est contenu est un bit d'information (I), et de deux, si le bit d'opportunité de justification est un bit de bourrage (R).
